(19) Europäisches Patentamt
European Patent Office
Office européen des brevets

(11) **EP 4 772 564 A1**

(12) **EUROPEAN PATENT APPLICATION**
published in accordance with Art. 153(4) EPC

(43) Date of publication:
08.07.2026 Bulletin 2026/28

(21) Application number: 24859433.5

(22) Date of filing: 09.08.2024

(51) International Patent Classification (IPC):
$C08J\ 9/06$ (2006.01)   $B60C\ 1/00$ (2006.01)
$B60C\ 11/03$ (2006.01)   $C08L\ 7/00$ (2006.01)

(52) Cooperative Patent Classification (CPC):
B60C 1/00; B60C 11/03; C08J 9/06; C08L 7/00

(86) International application number:
PCT/JP2024/028754

(87) International publication number:
WO 2025/047396 (06.03.2025 Gazette 2025/10)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.08.2023 JP 2023141680
14.12.2023 JP 2023211378

(71) Applicant: **BRIDGESTONE CORPORATION**
**Chuo-ku**
**Tokyo 104-8340 (JP)**

(72) Inventor: **SHIRAI, Nanako**
**Tokyo 104-8340 (JP)**

(74) Representative: **Marks & Clerk LLP**
**15 Fetter Lane**
**London EC4A 1BW (GB)**

(54) **VULCANIZED RUBBER FOR TIRE, AND PNEUMATIC TIRE**

(57) Provided is vulcanized rubber for a tire that can achieve excellent wet gripping performance in addition to on-ice gripping performance of a tire. The vulcanized rubber for a tire contains a rubber component, a filler, and a $C_5$ resin, wherein the proportion of natural rubber is 35 mass% or more and the proportion of butadiene rubber is 65 mass% or less in 100 mass% of the rubber component, the content of the filler is 55 parts by mass or more per 100 parts by mass of the rubber component, the proportion of carbon black is 70 mass% or more and the proportion of silica is not less than 0 mass% and not more than 20 mass% in 100 mass% of the filler, and a plurality of voids are present.

FIG. 1

# EP 4 772 564 A1

**Description**

TECHNICAL FIELD

The present disclosure relates to vulcanized rubber for a tire and a pneumatic tire.

BACKGROUND

Conventionally, in tires mainly used in winter, such as studless tires, various studies have been conducted, particularly regarding the tread portion of the tire, in order to improve braking performance and driving performance (on-ice performance) on icy and snowy road surfaces.

For example, PTL 1 discloses a rubber composition containing a rubber component comprising natural rubber, polybutadiene rubber, and styrene-butadiene copolymer rubber each in a predetermined proportion, and a filler containing 50 to 90 parts by mass of silica per 100 parts by mass of the rubber component, wherein the distribution ratio (Si distribution ratio) of silica to a phase (SB phase) containing polybutadiene rubber and styrene-butadiene copolymer rubber is 50 mass% or more in the total silica, and it is indicated that by applying such a rubber composition to a tread member of a tire, on-ice performance is improved.

In addition, PTL 1 suggests that, in order to set the above Si distribution ratio to 50 mass% or more, it is essential to use a modified copolymer (modified SBR) as the above styrene-butadiene copolymer rubber.

CITATION LIST

Patent Literature

PTL 1: WO 2019/116701 A1

SUMMARY

(Technical Problem)

However, the technology described in PTL 1 mainly focuses on on-ice performance and does not mention braking performance or driving performance (wet gripping performance) on wet road surfaces. Therefore, the above conventional technology had room for improvement in terms of achieving wet gripping performance in addition to on-ice gripping performance.

Accordingly, an object of the present disclosure is to provide vulcanized rubber for a tire that can achieve excellent wet gripping performance in addition to on-ice gripping performance of a tire.

Further, an object of the present disclosure is to provide a pneumatic tire that is excellent in both on-ice gripping performance and wet gripping performance.

(Solution to Problem)

The gist configuration of the present disclosure for solving the above problems is as follows.

[1] Vulcanized rubber for a tire comprising a rubber component, a filler, and a C5 resin, wherein

a proportion of natural rubber is 35 mass% or more and a proportion of butadiene rubber is 65 mass% or less in 100 mass% of the rubber component,
content of the filler is 55 parts by mass or more per 100 parts by mass of the rubber component,
a proportion of carbon black is 70 mass% or more and a proportion of silica is not less than 0 mass% and not more than 20 mass% in 100 mass% of the filler, and
a plurality of voids are present.

[2] The vulcanized rubber for a tire according to [1], wherein the proportion of natural rubber is 60 mass% or more in 100 mass% of the rubber component.

[3] The vulcanized rubber for a tire according to [1] or [2], wherein the content of the filler is 80 parts by mass or more per 100 parts by mass of the rubber component.

[4] The vulcanized rubber for a tire according to any one of [1] to [3], wherein the proportion of carbon black is 80 mass% or more in 100 mass% of the filler.

[5] The vulcanized rubber for a tire according to any one of [1] to [4], wherein content of the $C_5$ resin is not less than 5 parts by mass and not more than 18 parts by mass per 100 parts by mass of the rubber component.

[6] The vulcanized rubber for a tire according to any one of [1] to [5], wherein the $C_5$ resin is a hydrogenated $C_5$ resin.

[7] The vulcanized rubber for a tire according to any one of [1] to [6], further comprising a softener, wherein content of the softener is not less than 5 parts by mass and not more than 16 parts by mass per 100 parts by mass of the rubber component.

[8] A pneumatic tire using the vulcanized rubber for a tire according to any one of [1] to [7] in a tread portion, wherein

a plurality of blocks are defined on a tread surface of the tread portion by a plurality of circumferential main grooves extending in a tire circumferential direction and a plurality of width direction grooves extending in a tire width direction,

a plurality of sipes and a plurality of shallow grooves that extend in mutually opposite directions in the tire width direction, relative to one direction along the tire circumferential direction, are provided at a surface of the blocks,

a depth of the shallow grooves is smaller than a depth of the sipes,

an inclination angle $\theta1$ of the sipes relative to the tire circumferential direction is more than 0° and less than 90°,

an inclination angle $\theta2$ of the shallow grooves relative to the tire circumferential direction is more than 0° and less than 90°, and

a magnitude of a difference between the inclination angle $\theta1$ and the inclination angle $\theta2$ is 30° or less.

(Advantageous Effect)

According to the present disclosure, it is possible to provide vulcanized rubber for a tire that can achieve excellent wet gripping performance in addition to on-ice gripping performance of a tire.

Further, according to the present disclosure, it is possible to provide a pneumatic tire that is excellent in both on-ice gripping performance and wet gripping performance.

BRIEF DESCRIPTION OF THE DRAWINGS

In the accompanying drawings:

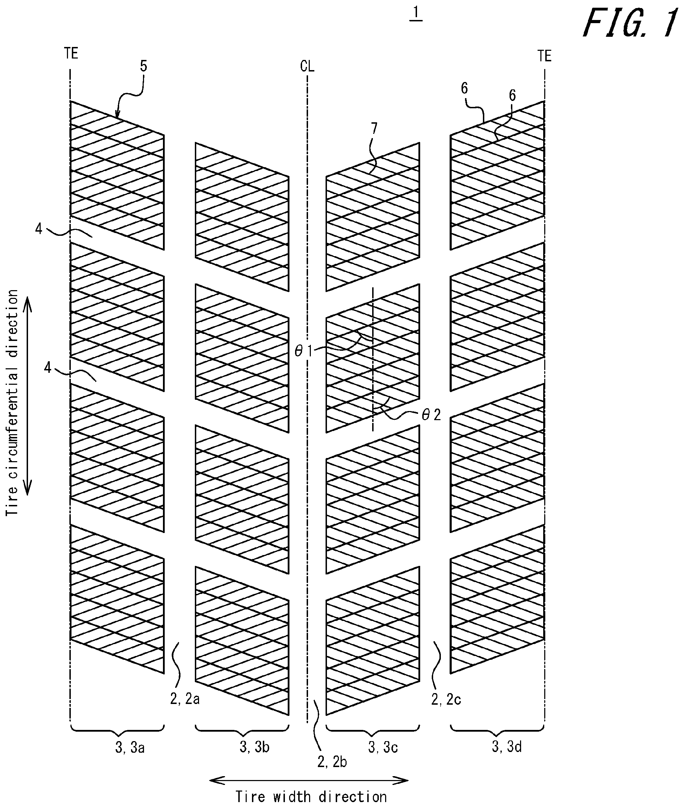

FIG. 1 is a developed view schematically illustrating a tread pattern in a tread portion of a pneumatic tire according to one embodiment of the present disclosure.

DETAILED DESCRIPTION

Hereinafter, embodiments of the present disclosure will be described. However, such description is intended for illustration of the present disclosure and is not intended to limit the present disclosure in any way.

It should be noted that the compounds described in this specification may be partially or entirely derived from fossil resources, derived from biological resources such as plant resources, or derived from recycled resources such as used tires. Furthermore, they may be derived from a mixture of any two or more of fossil resources, biological resources, and recycled resources.

(Vulcanized Rubber for Tire)

A vulcanized rubber for a tire according to one embodiment of the present disclosure (hereinafter, sometimes referred to as "the vulcanized rubber of the present embodiment") contains a rubber component, a filler, and a $C_5$ resin, wherein the proportion of natural rubber is 35 mass% or more and the proportion of butadiene rubber is 65 mass% or less in 100 mass% of the rubber component, the content of the filler is 55 parts by mass or more per 100 parts by mass of the rubber component, the proportion of carbon black is 70 mass% or more and the proportion of silica is not less than 0 mass% and not more than 20 mass% in 100 mass% of the filler, and a plurality of voids are present.

In the vulcanized rubber of the present embodiment, by setting the proportion of natural rubber in 100 mass% of the rubber component to 35 mass% or more and the proportion of butadiene rubber in 100 mass% of the rubber component to 65 mass% or less, the compatibility-related properties of the rubber component become favorable (in particular, the compatibility of the $C_5$ resin used in combination is enhanced), and the hysteresis loss at low temperatures increases. Further, in the vulcanized rubber of the present embodiment, by containing a filler of a prescribed composition in an amount of 55 parts by mass or more per 100 parts by mass of the rubber component, the overall hysteresis loss increases due to the increase in heat buildup caused by friction between fillers, thereby improving the on-ice gripping performance and wet gripping performance of the tire. Furthermore, since the vulcanized rubber of the present embodiment has a plurality of voids, it exhibits appropriate flexibility, and such voids function as drainage grooves that remove water generated on ice, thereby improving the on-ice gripping performance of the tire. In this manner, according to the vulcanized rubber of the present embodiment, not only the on-ice gripping performance of the tire but also the wet gripping performance can be made excellent.

In the vulcanized rubber of the present embodiment, a plurality of voids can be formed by foaming using a foaming agent, and in this case, the foaming ratio is usually 1 to 50%, preferably 5 to 40%. By setting the foaming ratio to 50% or less, the voids on the rubber surface do not become excessively large, a sufficient footprint area as a tread portion can be secured, and while ensuring the formation of bubbles (voids) that function effectively as drainage grooves, the amount of bubbles (voids) can be appropriately maintained.

Here, the foaming ratio of the vulcanized rubber refers to the mean foaming ratio Vs, and specifically means a value calculated by the following formula.

$$Vs = (\rho_0/\rho_1 - 1) \times 100 \ (\%)$$

In the formula, $\rho_1$ indicates the density (g/cm$^3$) of the vulcanized rubber, and $\rho_0$ indicates the density (g/cm$^3$) of the solid phase portion in the vulcanized rubber. The density of the vulcanized rubber and the density of the solid phase portion of the vulcanized rubber are measured by measuring the mass in ethanol and the mass in air, and are calculated therefrom. In addition, the foaming ratio of the vulcanized rubber described above can be appropriately varied depending on the type and amount of the foaming agent or foaming auxiliary agent.

The vulcanized rubber of the present embodiment can be obtained by vulcanizing a rubber composition of a prescribed composition. Furthermore, except for components such as foaming agents that decompose upon heating, the composition of each component in the vulcanized rubber of the present embodiment substantially corresponds to the composition of each component in the above rubber composition.

Hereinafter, each component of the rubber composition for obtaining the vulcanized rubber of the present embodiment will be described.

(Rubber Component)

The above rubber composition (and the vulcanized rubber of the present embodiment) contains at least natural rubber (NR) as a rubber component, and the proportion of natural rubber is 35 mass% or more in 100 mass% of the rubber component. Further, the proportion of natural rubber in 100 mass% of the rubber component is preferably 50 mass% or more, more preferably 60 mass% or more from the viewpoint of further enhancing the compatibility-related properties of the rubber component and further improving the on-ice gripping performance and wet gripping performance. On the other hand, the upper limit of the proportion of natural rubber in 100 mass% of the rubber component is not particularly limited, but is preferably 90 mass% or less, more preferably 85 mass% or less, and even more preferably 80 mass% or less. The natural rubber may be unmodified or may be modified.

The origin of the natural rubber (NR) is not particularly limited, and examples include those derived from Para rubber tree, guayule, and Russian dandelion. Examples of modified NR include deproteinized natural rubber (DPNR) and ultra-pure natural rubber (UPNR). Examples of modified NR include epoxidized natural rubber (ENR), hydrogenated natural rubber (HNR), and grafted natural rubber. Examples of modified IR include epoxidized synthetic isoprene rubber, hydrogenated synthetic isoprene rubber, and grafted synthetic isoprene rubber. These isoprene-based rubbers may be used alone or in combination of two or more.

The above rubber composition (and the vulcanized rubber of the present embodiment) contains at least butadiene rubber (BR) as a rubber component, and the proportion of butadiene rubber is 65 mass% or less in 100 mass% of the rubber component. If the proportion of butadiene rubber exceeds 65 mass%, either the on-ice gripping performance or the wet gripping performance may deteriorate. Further, the proportion of butadiene rubber in 100 mass% of the rubber component is preferably 50 mass% or less, more preferably 40 mass% or less, even more preferably 38 mass% or less, and still more preferably 35 mass% or less from the viewpoint of further enhancing the compatibility-related properties of the rubber component and further improving the on-ice gripping performance and wet gripping performance. On the other hand, the lower limit of the proportion of butadiene rubber in 100 mass% of the rubber component is not particularly limited, but is preferably 10 mass% or more, more preferably 20 mass% or more, and even more preferably 30 mass% or more. The butadiene rubber may be unmodified or may be modified.

The above rubber composition (and the vulcanized rubber of the present embodiment) may contain other rubber components in addition to natural rubber (NR) and butadiene rubber (BR). Examples of other rubber components include isoprene rubber (IR), styrene-butadiene rubber (SBR), acrylonitrile-butadiene rubber (NBR), chloroprene rubber (CR), ethylene-propylene rubber (EPM), ethylene-propylene diene rubber (EPDM), polysulfide rubber, silicone rubber, fluororubber, urethane rubber, and the like. These other rubber components may be modified. These other rubber components may be used alone or in combination of two or more. Further, it may be the case that these other rubber components are not used (that is, the rubber component may consist only of natural rubber (NR) and butadiene rubber (BR)). In particular, it may be the case that the above rubber composition (and the vulcanized rubber of the present embodiment) does not contain styrene-butadiene rubber (SBR).

(Filler)

The above rubber composition (and the vulcanized rubber of the present embodiment) contains a filler. Further, the above rubber composition (and the vulcanized rubber of the present embodiment) contains at least carbon black as a filler, and the proportion of carbon black in 100 mass% of the filler is 70 mass% or more. As a result, the wear resistance performance of the tire tread portion can be improved. Furthermore, the proportion of carbon black in 100 mass% of the filler is preferably 75 mass% or more, more preferably 80 mass% or more, and may be 100 mass% (that is, the filler consists only of carbon black) from the viewpoint of further improving the wear resistance performance of the tire tread portion.

In the above rubber composition (and the vulcanized rubber of the present embodiment), the proportion of silica in 100 mass% of the filler is not less than 0 mass% and not more than 20 mass%. Here, in the case of resin addition, the wear resistance performance decreases. The proportion of silica in 100 mass% of the filler is preferably 5 mass% or more, more preferably 10 mass% or more from the above viewpoint and from the viewpoint of further improving the wet gripping performance.

The above rubber composition (and the vulcanized rubber of the present embodiment) contains the filler in an amount of 55 parts by mass or more per 100 parts by mass of the rubber component. If the content of the filler is less than 55 parts by mass, the wear resistance performance as a tire tread portion may be insufficient. Further, the content of the filler per 100 parts by mass of the rubber component is preferably 65 parts by mass or more, more preferably 75 parts by mass or more, and even more preferably 80 parts by mass or more from the viewpoint of further improving the wear resistance performance as a tire tread portion. On the other hand, the upper limit of the content of the filler per 100 parts by mass of the rubber component is not particularly limited, but is preferably 120 parts by mass or less, more preferably 110 parts by mass or less, and even more preferably 100 parts by mass or less from the viewpoint of low rolling resistance.

The main examples of the filler include carbon black and silica. In addition, other fillers besides carbon black and silica can also be used as the filler.

- Carbon Black -

Carbon black can reinforce the rubber composition and improve the wear resistance of the rubber composition. Preferred examples of carbon black include plant-derived carbon black and carbon black obtained by recycling ("recovered carbon black" or "recycled carbon black"). Here, examples of plant-derived carbon black include those derived from castor oil and rosin oil. Recovered carbon black will be described in detail below.

The content of carbon black (the total of recovered carbon black and carbon black other than recovered carbon black) in the rubber composition is preferably 100 parts by mass or less, more preferably 80 parts by mass or less, and even more preferably 70 parts by mass or less, per 100 parts by mass of the rubber component, from the viewpoint of operability of the rubber composition.

-- Recovered Carbon Black --

In this specification, "recovered carbon black" refers to carbon black obtained by recovery from raw materials that are waste subjected to recycling. Examples of the waste include waste rubber, used tires, and waste oil. Waste rubber refers to all discarded rubber, not limited to that generated from rubber products, but also including unnecessary scraps generated during production or repair of rubber products. Examples of scraps include buffing dust and peeling rubber. Buffing dust is, for example, fine rubber generated in the buffing process of retreading tires, in which the tread portion remaining on the base tire is shaved. Peeling rubber is, for example, long rubber with a width of 1 to 2 cm, stripped from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires, rubber hoses, and rubber conveyor belts, as well as rubber parts or components in the manufacturing stage of final products. Used tires may be those subjected to retreading, or may be waste tires generated by tire replacement, scrapping of vehicles, or the like, and ELT (End-of-Life Tire) that has reached the end of its life as a tire, or any other tires discarded for any reason. Waste oil is not limited to that generated by decomposing plastics or rubber, but also includes, for example, used oils discharged from industry, such as animal and vegetable oils, lubrication oil, insulating oil, and cutting oil. Among these, as waste oil, those not containing compositions other than organic substances, such as those derived from silicone rubber or polyvinyl chloride, are preferred. Further, as waste oil, those in which carbon black or rubber containing carbon black is mixed are preferred.

"Recovered carbon black" is different from carbon black directly produced from hydrocarbons such as petroleum, natural gas, or coal, that is, carbon black that is not a recycled product. Note that "used" here includes not only those actually used and then discarded, but also those manufactured but actually not used and discarded.

Further, the recovered carbon black is preferably obtained by thermal decomposition of vulcanized rubber products containing carbon black. Recovered carbon black obtained by thermal decomposition of vulcanized rubber products containing carbon black is easily available because there are a large number of vulcanized rubber products containing carbon black and it can be easily obtained by thermal decomposition. Furthermore, the recovered carbon black is preferably obtained from the solid residue generated by thermal decomposition of vulcanized rubber products containing carbon black. When rubber products containing carbon black are thermally decomposed, solid residue and volatile components (oil) are obtained, and recovered carbon black can be recovered from either.

When recovering carbon black from volatile components, it is possible to recover oil fractions suitable for manufacturing carbon black and use them to manufacture carbon black by existing carbon black manufacturing methods (for example, JP 2015-520259 A). In this case, unlike carbon black recovered from solid residue, there are advantages such as no impurities and no mixing of different grades. In addition, in the manufacture of low environmental impact carbon black, there are various options such as using, in addition to oil obtained by recovering volatile components obtained by the above-mentioned rubber thermal decomposition, plant oil, oil derived from waste plastics, and the like. However, edible resources such as plant oil have issues in securing a sufficient amount due to demand for other uses such as food, and the impact on the environment due to expansion of cultivated land must also be considered. Further, oil derived from waste plastics and the like is also used for other purposes such as horizontal recycling of plastics, so supply issues are also considered. On the other hand, when using volatile components (oil) generated by thermal decomposition of vulcanized rubber products, especially tires, it is possible to continue using existing materials within the tire industry, thereby reducing the consumption of new materials in new tire manufacturing and contributing to the reduction of environmental impact as an industry. The grade of the carbon black is not particularly limited, and examples include N134, N110, N220, N234, N219, N339, N330, N326, N351, N550, N762, and the like.

The solid residue obtained by thermally decomposing waste such as used rubber and used tires contains, in addition to carbon black, ash. The ash is derived from non-volatile components contained in rubber or tires. Therefore, the recovered carbon black obtained from such solid residue has a relatively low content of carbon black. On the other hand, considering the various physical properties required for tires manufactured using recovered carbon black, the carbon content in the recovered carbon black is preferably as high as possible. In the recovered carbon black, the carbon content is preferably 80 mass% or more, more preferably 85 mass% or more, even more preferably 87 mass% or more, and particularly preferably 89 mass% or more. The carbon content in the recovered carbon black is preferably 97 mass% or less. Note that the carbon content is a value excluding adsorbed moisture.

The ash specifically includes zinc oxide, zinc sulfide, silica, iron compounds (iron oxide), calcium oxide, aluminum oxide, magnesium oxide, and the like. In the case of recovered carbon black produced from solid residue obtained by thermally decomposing waste, even if various processes for removing ash are performed, a certain amount of ash remains. In the present embodiment, it is permissible for the recovered carbon black to contain ash. In one embodiment, the lower limit value of the ash content in the recovered carbon black may be 0.5 mass%.

The recovered carbon black can be obtained from a thermal decomposition process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at a relatively low temperature (paragraph [0027]). The carbon black obtained from such a thermal decomposition process is, as mentioned in paragraph [0004] of JP 6856781 B2, usually lacking functional groups on its surface (Comparison of surface morphology and chemistry of pyrolytic carbon black and commercial carbon black, Powder Technology 160 (2005) 190-193).

The recovered carbon black may lack functional groups on its surface, or may be treated to include functional groups on its surface. The treatment to include functional groups on the surface of recovered carbon black can be carried out by conventional methods. For example, European Patent Application Publication No. 3173251 describes obtaining carbon black containing hydroxyl groups and/or carboxyl groups on its surface by treating carbon black obtained from a thermal decomposition process with potassium permanganate under acidic conditions. Further, JP 6856781 B2 describes obtaining carbon black with an activated surface by treating carbon black obtained from a thermal decomposition process with an amino acid compound containing at least one thiol group or disulfide group. The recovered carbon black according to the present embodiment also encompasses such carbon black treated to include functional groups on its surface.

Further, as the thermal decomposition of crosslinked rubber products (vulcanized rubber products) such as used tires, for example, a thermal decomposition method at a temperature of 650°C or higher can be mentioned.

Regarding the crosslinked rubber products used for the above decomposition, it is possible to group them in advance according to the type of rubber component blended, and then carry out the decomposition process for each group. Alternatively, grouping may be performed in advance according to the type of filler blended (for example, the type of carbon black, the type of silica, the mixing ratio of carbon black and silica, etc.), and the decomposition process may be carried out for each group. Furthermore, both grouping by type of rubber component and grouping by type of filler may be performed, and then the decomposition process may be carried out for each group. When the decomposition process is carried out for each group in this way, recovered carbon black having more uniform physical properties can be obtained, and when it is blended again into a rubber component, a rubber composition with better performance can be obtained.

Further, when the crosslinked rubber product used for the above decomposition is derived from a tire, it is possible to group them in advance by tire type (for example, for passenger vehicles, for trucks and buses, for large vehicles such as off-road vehicles, for aircraft, for agricultural vehicles, etc.), and then carry out the decomposition process for each group. Alternatively, grouping may be performed in advance by tire component (for example, tread rubber, sidewall rubber, bead portion rubber, steel cord coating rubber, organic fiber coating rubber, pad rubber, cushion rubber, etc.), and then the decomposition process may be carried out for each group. Furthermore, both grouping by tire type and grouping by tire component may be performed, and then the decomposition process may be carried out for each group. When the decomposition process is carried out for each group in this way, recovered carbon black having more uniform physical properties can be obtained, and when it is blended again into a rubber component, a rubber composition with better performance can be obtained.

The recovered carbon black preferably has a nitrogen adsorption specific surface area by the BET method of 40 to 100 $m^2$/g, more preferably 50 to 90 $m^2$/g, and particularly preferably 55 to 75 $m^2$/g. Here, in the present specification, the nitrogen adsorption specific surface area by the BET method of the recovered carbon black is the statistical thickness specific surface area (STSA), and is determined in accordance with ASTM D6556.

The recovered carbon black preferably has a pH of 4 to 12, more preferably 5 to 11, and particularly preferably 6 to 10. Here, in the present specification, the pH of the recovered carbon black is determined in accordance with ASTM D1512.

The recovered carbon black preferably has a toluene discoloration transmittance of 60% or more, more preferably 70% or more, and particularly preferably 80% or more. Here, in the present specification, the toluene discoloration transmittance of the recovered carbon black is determined in accordance with ASTM D1618.

The recovered carbon black preferably has a heating loss at 125°C of 3 mass% or less, more preferably 2.5 mass% or less, and particularly preferably 2 mass% or less. Here, in the present specification, the heating loss at 125°C of the recovered carbon black is determined in accordance with ASTM D1509.

The recovered carbon black preferably has a sulfur content of 5 mass% or less, more preferably 3.5 mass% or less, and particularly preferably 3 mass% or less.

The recovered carbon black preferably has a 35 mesh sieve residue of 20 mass ppm or less, more preferably 15 mass ppm or less, and particularly preferably 10 mass ppm or less. Here, in the present specification, the 35 mesh sieve residue of the recovered carbon black is determined in accordance with ASTM D1514.

The recovered carbon black preferably has a 325 mesh (44 μm) sieve residue of 1000 mass ppm or less, more preferably 700 mass ppm or less, and particularly preferably 300 mass ppm or less. Here, in the present specification, the 325 mesh (44 μm) sieve residue of the recovered carbon black is determined in accordance with ASTM D1514.

The recovered carbon black preferably has a pellet hardness of 100 cN or less, more preferably 90 cN or less, and particularly preferably 80 cN or less. Here, in the present specification, the pellet hardness of the recovered carbon black is determined in accordance with ASTM D5230.

The recovered carbon black preferably has a pellet fines amount of 10 mass% or less, more preferably 7 mass% or less, and particularly preferably 5 mass% or less. Here, in the present specification, the pellet fines amount of the recovered carbon black is determined in accordance with ASTM D1508.

The recovered carbon black preferably has a particle diameter (D97) of 25 μm or less, more preferably 15 μm or less, and particularly preferably 10 μm or less. Here, in the present specification, the particle diameter (D97) of the recovered carbon black is determined using a laser diffraction particle size distribution analyzer, with a refractive index of 1.33 for water and 1.75 for the filler.

The recovered carbon black preferably has a proportion of particles of 5 μm or less of 50 vol% or more, more preferably 70 vol% or more, and particularly preferably 80 vol% or more.

The recovered carbon black preferably has an ash content of 25 mass% or less, more preferably 20 mass% or less, and particularly preferably 15 mass% or less. When the ash content of the recovered carbon black is 25 mass% or less, it is possible to improve various physical properties of rubber products to which the rubber composition is applied. Here, in the present specification, the ash content of the recovered carbon black is determined in accordance with ASTM D8474 and D1506.

The recovered carbon black preferably has a dibutyl phthalate (DBP) absorption amount of 70 to 120 mL/100 g, more preferably 75 to 110 mL/100 g, and particularly preferably 80 to 100 mL/100 g. Here, in the present specification, the DBP absorption amount of the recovered carbon black is determined in accordance with ASTM D2414.

The recovered carbon black preferably has a compressed dibutyl phthalate (24M4DBP) absorption amount of 50 to 110 mL/100 g, more preferably 60 to 100 mL/100 g, and particularly preferably 70 to 90 mL/100 g. Here, in the present specification, the 24M4DBP absorption amount of the recovered carbon black is determined in accordance with ASTM D3493.

As the recovered carbon black, a commercially available product can be used. As such a commercial product, for example, the product name "PB365" manufactured by Enrestec Co., Ltd. can be mentioned. PB365 is a recovered carbon black produced through the thermal decomposition of used tires, has a nitrogen adsorption specific surface area by the BET method of 73.6 $m^2/g$, and contains about 17 mass% ash.

The content of the recovered carbon black is preferably 1 to 100 parts by mass per 100 parts by mass of the rubber component, more preferably 5 to 80 parts by mass, still more preferably 5 to 50 parts by mass, even more preferably 5 to 30 parts by mass, and particularly preferably 5 to 20 parts by mass. When the content of recovered carbon black is 5 parts by mass or more per 100 parts by mass of the rubber component, the effect of increasing the ratio of sustainable materials in rubber products to which the rubber composition is applied is significant, and when it is 50 parts by mass or less, the fracture resistance of the rubber composition can be more reliably maintained.

- Silica -

The above silica is not particularly limited, and examples include wet silica (hydrous silicate), dry silica (anhydrous silicate), calcium silicate, aluminum silicate, and the like. The above silica may be used alone or in combination of two or more kinds.

- Other Fillers -

As other fillers besides carbon black and silica, for example, aluminum hydroxide, clay, alumina, talc, mica, kaolin, glass balloon, glass beads, calcium carbonate, magnesium carbonate, magnesium hydroxide, magnesium oxide, titanium oxide, potassium titanate, barium sulfate, and the like can be mentioned. The above other fillers may be used alone or in combination of two or more kinds. Further, it may be the case that the above other fillers are not used (that is, the filler may consist only of carbon black and silica).

($C_5$ resin)

The above rubber composition (and the vulcanized rubber of the present embodiment) further contains a $C_5$ resin. Among resins, the $C_5$ resin has high compatibility with the rubber component of the prescribed composition of the present embodiment, and by further containing a $C_5$ resin in the vulcanized rubber of the present embodiment, it is possible to further improve on-ice gripping performance and wet gripping performance. The $C_5$ resin may be used alone or in combination of two or more kinds.

Note that, in the present specification, "$C_5$ resin" refers to a resin obtained by polymerizing a $C_5$ fraction. The $C_5$ fraction usually includes olefinic hydrocarbons such as 1-pentene, 2-pentene, 2-methyl-1-butene, 2-methyl-2-butene, 3-methyl-1-butene, and the like, and diolefinic hydrocarbons such as 2-methyl-1,3-butadiene, 1,2-pentadiene, 1,3-pentadiene, 3-methyl-1,2-butadiene, and the like.

As the $C_5$ resin, aliphatic hydrocarbon resin and alicyclic hydrocarbon resin can be mentioned.

As the aliphatic hydrocarbon resin, petroleum resin produced by polymerizing 1,3-pentadiene, which is a $C_5$ petroleum fraction, as a main raw material can be mentioned, and, for example, the product name "Quinton 100" series (A100, B170, K100, M100, R100, N295, U190, S100, D100, U185, P195N, etc.) manufactured by Zeon Corporation can be mentioned. Further, as petroleum resins produced by polymerizing other $C_5$ petroleum fractions, the product name "Escorez" series (1102, 1202(U), 1304, 1310, 1315, 1395, etc.) manufactured by ExxonMobil, and the product name "Hi-Letz" series (G-100X, -T-100X, -C-110X, -R-100X, etc.) manufactured by Mitsui Chemicals Co., Ltd. can be mentioned.

As the alicyclic hydrocarbon resin, cyclopentadiene-based petroleum resin produced mainly from cyclopentadiene extracted from a $C_5$ fraction, and dicyclopentadiene-based petroleum resin produced mainly from dicyclopentadiene in a $C_5$ fraction can be mentioned. As the above cyclopentadiene-based petroleum resin, the product name "Quinton 1000" series (1325, 1345, etc.) manufactured by Zeon Corporation can be mentioned. Further, as the above dicyclopentadiene-based petroleum resin, the product name "MARUKAREZ M" series (M-890A, M-845A, M-990A, etc.) manufactured by Maruzen Petrochemical Co., Ltd. can be mentioned.

The above $C_5$ resin is preferably a hydrogenated $C_5$ resin. In this case, since the hydrogenated $C_5$ resin has even higher compatibility with the rubber component, it is possible to further improve on-ice gripping performance and wet gripping performance, and, compared to non-hydrogenated $C_5$ resin, it is possible to improve manufacturing operability.

The content of the $C_5$ resin in the above rubber composition (and the vulcanized rubber of the present embodiment) is preferably not less than 5 parts by mass and not more than 18 parts by mass per 100 parts by mass of the rubber component. When the content of the $C_5$ resin is 5 parts by mass or more, a further improvement effect in on-ice gripping performance and wet gripping performance can be obtained, and when it is 18 parts by mass or less, the adhesiveness of the rubber composition can be suppressed within a range that does not cause problems in operability. From the same viewpoint, the content of the $C_5$ resin per 100 parts by mass of the rubber component is more preferably not less than 8 parts by mass, and still more preferably not less than 12 parts by mass.

(Softener)

The above rubber composition (and the vulcanized rubber of the present embodiment) preferably further contains a softener. The softener is a compounding agent that softens the rubber composition and vulcanized rubber, and by further containing a softener in the vulcanized rubber of the present embodiment, it is possible to further improve on-ice gripping performance and wet gripping performance.

Note that the softener is usually liquid at 25°C (room temperature).

The softener is not particularly limited, and examples include oils, liquid polymers, and the like, among which oils are preferred. These softeners may be used alone or in combination of two or more kinds.

As the above oil, petroleum-based oils such as aromatic oil, paraffin oil, naphthene oil, and the like; and plant-based oils such as palm oil, castor oil, cottonseed oil, soybean oil, and the like can be mentioned. Among these, petroleum-based oils are preferred as the above oil.

As the above liquid polymer, liquid polybutadiene, liquid polyisoprene, liquid styrene-butadiene, and the like can be mentioned. Further, the above liquid polymer preferably has a weight-average molecular weight of 5,000 to 100,000.

Note that, in the present specification, the above liquid polymer is not included in the aforementioned rubber component.

The content of the softener in the above rubber composition (and the vulcanized rubber of the present embodiment) is preferably not less than 5 parts by mass and not more than 16 parts by mass per 100 parts by mass of the rubber component. When the content of the softener is 5 parts by mass or more, the effect of improving on-ice gripping performance and wet gripping performance becomes significant, while when it is 16 parts by mass or less, it is possible to adjust (increase) the viscosity of the rubber composition, which has been decreased by the addition of resin, and to improve the manufacturing operability of the rubber composition and vulcanized rubber. From the same viewpoint, the content of the softener per 100 parts by mass of the rubber component is more preferably not less than 8 parts by mass, still more preferably not less than 10 parts by mass, and more preferably not more than 14 parts by mass, and still more preferably not more than 12 parts by mass.

(Foaming Agent)

The above rubber composition preferably contains a foaming agent. As a result, a plurality of voids can be formed in the obtained vulcanized rubber. As the foaming agent, for example, azodicarbonamide (ADCA), dinitrosopentamethylenetetramine (DPT), dinitrosopentastyrenetetramine, benzenesulfonylhydrazide derivative, p,p'-oxybisbenzenesulfonylhydrazide (OBSH), ammonium bicarbonate, sodium bicarbonate, ammonium carbonate, which generate carbon dioxide, nitrososulfonylazo compound, N,N'-dimethyl-N,N'-dinitrosophthalamide, toluenesulfonylhydrazide, p-toluenesulfonylsemicarbazide, p,p'-oxybisbenzenesulfonylsemicarbazide, and the like can be mentioned. These foaming agents may be used alone or in combination of two or more kinds.

The content of the foaming agent in the above rubber composition is preferably not less than 7 parts by mass and not more than 12 parts by mass per 100 parts by mass of the rubber component from the viewpoint of forming a desired plurality of voids in the vulcanized rubber.

(Foaming Aid)

The above rubber composition preferably further contains a foaming aid in addition to the foaming agent. By using a foaming aid together, it is possible to promote the foaming reaction, increase the degree of completion of the reaction, and suppress unnecessary deterioration over time. As the foaming aid, urea, zinc stearate, zinc benzenesulfinate, zinc oxide, and the like can be mentioned. These foaming aids may be used alone or in combination of two or more kinds.

(Vulcanizing Agent)

The above rubber composition preferably contains a vulcanizing agent. As the vulcanizing agent, sulfur is usually used, and, for example, powdered sulfur, precipitated sulfur, colloidal sulfur, surface-treated sulfur, insoluble sulfur, and the like can be mentioned. The content of the vulcanizing agent in the above rubber composition is preferably not less than 0.1 part by mass and not more than 10 parts by mass per 100 parts by mass of the rubber component. When the content of the vulcanizing agent is 0.1 part by mass or more, vulcanization can proceed sufficiently, and when it is 10 parts by mass or less, it is possible to suppress the aging resistance of the vulcanized rubber. From the same viewpoint, the content of the vulcanizing agent per 100 parts by mass of the rubber component is more preferably not less than 0.5 part by mass, still more preferably not less than 1 part by mass, and more preferably not more than 8 parts by mass, and still more preferably not more than 6 parts by mass.

The above rubber composition may contain, in addition to those described above, other components. As such other components, for example, silane coupling agent, resins other than $C_5$ resin, vulcanization accelerator, age resistor, zinc oxide, stearic acid, and other compounding agents commonly used in the rubber industry can be mentioned, and they can be appropriately selected and included within a range not departing from the object of the present disclosure. Further, as these compounding agents, commercially available products can be suitably used.

(Production of Vulcanized Rubber)

The method for producing the vulcanized rubber of the present embodiment is not particularly limited. For example, by appropriately selecting and blending the above-described components, kneading, warming, extrusion, and the like, a rubber composition can be prepared, and then by vulcanizing the rubber composition, the vulcanized rubber of the present embodiment can be produced.

The preparation of the rubber composition is not particularly limited, and a kneader such as a Banbury mixer, roll, or internal mixer may be used. Further, the kneading may be performed in a single stage or may be divided into two or more stages. For example, in a first stage, components other than vulcanizing agents and vulcanization accelerators, as well as foaming agents, may be compounded and kneaded, and in a second stage, vulcanizing agents and vulcanization accelerators, as well as foaming agents, may be compounded and kneaded. In this case, it is preferable that the maximum temperature during the first stage kneading is 130 to 170°C, and the maximum temperature during the second stage kneading is preferably 90 to 120°C.

(Pneumatic Tire)

A pneumatic tire according to one embodiment of the present disclosure (hereinafter, sometimes referred to as "the tire of the present embodiment") uses the vulcanized rubber of the present embodiment described above in the tread portion. In other words, the tire of the present embodiment is provided with a tread portion composed of the vulcanized rubber of the present embodiment described above. The tire of the present embodiment is characterized in that a plurality of blocks are defined on a tread surface of the tread portion by a plurality of circumferential main grooves extending in a tire circumferential direction and a plurality of width direction grooves extending in a tire width direction; a plurality of sipes and a plurality of shallow grooves are provided at a surface of the blocks so as to extend in mutually opposite directions in the tire width direction relative to one direction along the tire circumferential direction; a depth of the shallow grooves is smaller than a depth of the sipes; an inclination angle $\theta 1$ of the sipes relative to the tire circumferential direction is more than 0° and less than 90°; an inclination angle $\theta 2$ of the shallow grooves relative to the tire circumferential direction is more than 0° and less than 90°; and a magnitude of a difference between the inclination angle $\theta 1$ and the inclination angle $\theta 2$ is 30° or less.

The tire of the present embodiment is provided with a tread portion composed of the vulcanized rubber of the present embodiment, and since the tread surface of the tread portion has the above-described configuration, it is excellent in on-ice gripping performance and also excellent in wet gripping performance.

Hereinafter, the configuration of the tread surface of the tire of the present embodiment will be described in detail.

Here, the "tread surface" refers to a surface extending over the entire tire circumferential direction of the contact patch that comes into contact with the road surface when the pneumatic tire is mounted on an applicable rim, inflated to a prescribed internal pressure, and loaded with the maximum load capability.

Further, the "circumferential main groove" and "width direction groove" refer to grooves having a groove width (opening width) of 2 mm or more, and the "sipe" refers to a groove having a sipe width such that a part thereof is closed when in contact, for example, a sipe width of not less than 0.3 mm and not more than 0.6 mm. Here, the "groove width" and "sipe width" refer to the opening width in a state where the pneumatic tire is mounted on an applicable rim, inflated to a prescribed internal pressure, and is unloaded.

Further, the "depth" of the sipe or shallow groove refers to the maximum depth in a state where the pneumatic tire is mounted on an applicable rim, inflated to a prescribed internal pressure, and is unloaded.

Further, the "inclination angle" of the sipe or shallow groove, when the sipe or shallow groove is not linear in a planar view, means the inclination angle relative to the tire circumferential direction of a virtual line connecting the endpoints. Also, for the sipe and shallow groove, the measurement is made in the tire circumferential direction opposite to the tire width direction (see FIG. 1).

Further, the "applicable rim" refers to the approved rim for the applicable size described or to be described in the industrial standards effective in the region where the tire is produced and used, such as the JATMA YEAR BOOK of the Japan Automobile Tyre Manufacturers Association (JATMA) in Japan, the STANDARDS MANUAL of the European Tyre and Rim Technical Organisation (ETRTO) in Europe, and the YEAR BOOK of The Tire and Rim Association, Inc. (TRA) in the United States (that is, the "rim" of the above "wheel" includes, in addition to current sizes, sizes that may be included in the above industrial standards in the future. As an example of "sizes to be described in the future," sizes described as "FUTURE DEVELOPMENTS" in the 2013 edition of the ETRTO can be cited). However, in the case of sizes not described in the above industrial standards, it refers to a rim having a width corresponding to the bead width of the tire.

Further, the "prescribed internal pressure" refers to the maximum air pressure corresponding to the maximum load capability of a single tire for the applicable size and ply rating described in the above JATMA, etc., and in the case of sizes not described in the above industrial standards, the "prescribed internal pressure" refers to the maximum air pressure corresponding to the maximum load capability specified for each vehicle on which the tire is mounted.

Further, the "maximum load" refers to the load corresponding to the above maximum load capability.

FIG. 1 is a developed view schematically illustrating a tread pattern in the tread portion of the tire of the present embodiment. The internal structure of the tire is not particularly limited, but in accordance with convention, the tire may be provided with a pair of bead portions, a pair of sidewalls connected to the bead portions, and a tread portion connected to the sidewall portions. Furthermore, the tire may be provided with a carcass extending toroidally between the pair of bead portions, and a reinforcement layer such as a belt on the tire radial outer side of the crown portion of the carcass.

As illustrated in FIG. 1, this tire has a plurality of circumferential main grooves 2 extending in the tire circumferential direction on the tread surface 1 of the tread portion, and a plurality of land portions 3 are defined between the circumferential main grooves 2 or by the circumferential main grooves 2 and the tread edge TE.

In the illustrated example, three circumferential main grooves 2 are formed, with the circumferential main groove 2a located in one half portion in the tire width direction with the tire equator CL as the boundary, the circumferential main groove 2b extending along the tire equator CL, and the circumferential main groove 2c located in the other half portion in the tire width direction with the tire equator CL as the boundary. On the other hand, the number of circumferential main grooves 2 is not limited to three, and any plural number may be used.

In the illustrated example, all of the circumferential main grooves 2 extend straight in the tire circumferential direction, but they may also extend in a zigzag, bent, or curved manner. Further, in the illustrated example, the circumferential main grooves 2 extend (without inclination) in the tire circumferential direction, but they may also extend at an inclination angle of 5° or less relative to the tire circumferential direction. The groove width (opening width) of the circumferential main grooves 2 may be, for example, 2 mm to 12 mm. The groove depth (maximum depth) of the circumferential main grooves 2 may be, for example, 5 mm to 12 mm.

In the illustrated example, four land portions 3 are formed, with land portions 3a and 3b located in one half portion in the tire width direction with the tire equator CL as the boundary, and land portions 3c and 3d located in the other half portion in the tire width direction with the tire equator CL as the boundary. On the other hand, the number of land portions 3 corresponds to the number of circumferential main grooves 2, and may be three or more. Also, any of the land portions 3 may be located on the tire equator CL.

Each land portion 3 is provided with a plurality of width direction grooves 4 extending in the tire width direction. In the illustrated example, in each land portion 3, a plurality of width direction grooves 4 are arranged at approximately equal intervals in the tire circumferential direction, thereby dividing the land portion 3 into a plurality of (substantially same-shaped) blocks 5.

In the illustrated example, all of the width direction grooves 4 extend straight, but they may also extend in a zigzag, bent, or curved manner. Further, the width direction grooves 4 may extend in the tire width direction, or may extend at an inclination angle of 60° or less (or 45° or less, or 30° or less) relative to the tire width direction. The groove width (opening width) of the width direction grooves 4 may be, for example, 2 mm to 12 mm. The groove depth (maximum depth) of the width direction grooves 4 may be, for example, 5 mm to 12 mm. Further, in the illustrated example, the width direction grooves 4 defining the land portion 3a and the width direction grooves 4 defining the land portion 3b are located on a straight line, and the width direction grooves 4 defining the land portion 3c and the width direction grooves 4 defining the land portion 3d are located on a straight line. With such a configuration, drainage performance can be further enhanced. On the other hand, the width direction grooves 4 defining the land portion 3a and the width direction grooves 4 defining the land portion 3b need not be located on a straight line (their virtual extension lines may be offset from each other in the tire circumferential direction), and similarly, the width direction grooves 4 defining the land portion 3c and the width direction grooves 4 defining the land portion 3d need not be located on a straight line (their virtual extension lines may be offset from each other in the tire circumferential direction). Further, in the illustrated example, the width direction grooves 4 located in one half portion in the tire width direction with the tire equator CL as the boundary and the width direction grooves 4 located in the other half portion in the tire width direction are inclined in opposite directions in the tire circumferential direction relative to the tire width direction, but they may also be inclined in the same direction in the tire circumferential direction relative to the tire width direction.

In this way, a plurality of blocks 5 are defined by a plurality of circumferential main grooves 2 extending in the tire circumferential direction and a plurality of width direction grooves 4 extending in the tire width direction. In the illustrated example, the blocks 5 are substantially parallelogram-shaped in this planar view, but are not limited to this shape.

As illustrated in FIG. 1, a plurality of sipes 6 and a plurality of shallow grooves 7 are provided at the surface of the blocks 5 so as to extend in mutually opposite directions in the tire width direction relative to one direction along the tire circumferential direction. Further, the sipes 6 and the shallow grooves 7 intersect each other. In this way, since the tire of the present embodiment is provided with a plurality of sipes 6 and a plurality of shallow grooves 7 at the surface of the blocks 5, especially when new, both the sipes 6 and the shallow grooves 7 can remove water film, thereby improving on-ice gripping performance and wet gripping performance.

In the illustrated example, four sipes 6 are arranged in each block 5. The number of sipes 6 may be any plural number and is not limited to four. Further, in the illustrated example, the four sipes 6 are arranged at equal intervals in the tire circumferential direction so that the size of the block pieces defined by the sipes 6 is substantially the same. On the other hand, the sipes 6 need not necessarily be arranged at equal intervals in the tire circumferential direction. In the illustrated example, the sipes 6 are flat-plate-shaped sipes and extend linearly in a planar view, but may also extend in a zigzag manner. The sipes 6 may also be so-called three-dimensional sipes in which the inner wall surface of the sipe forms an uneven shape along the sipe depth direction. In this example, both ends of the sipes 6 open to the circumferential main grooves 2, but either one or both ends may terminate within the block 5.

In the present embodiment, the inclination angle $\theta 1$ of the sipes 6 relative to the tire circumferential direction is more than 0° and less than 90°. If the inclination angle $\theta 1$ is 0°, the edge component in the tire width direction (edge component relative to the tire circumferential direction) by the sipes 6 becomes small. Further, if the inclination angle $\theta 1$ is 90°, the edge component in the tire circumferential direction (edge component relative to the tire width direction) by the sipes 6 becomes small.

In the present embodiment, the sipe depth (maximum depth) of the sipes 6 is not particularly limited, but may be, for example, 5 to 8 mm.

In the illustrated example, fifteen shallow grooves 7 are arranged in each block 5. The number of shallow grooves 7 may be any plural number and is not limited to fifteen. Further, in the illustrated example, the fifteen shallow grooves 7 are arranged at equal intervals in the tire circumferential direction so that the size of the block pieces defined by the shallow grooves 7 is substantially the same. The pitch interval of the shallow grooves 7 in the tire circumferential direction may be, for example, 1.0 to 3.0 mm. On the other hand, the shallow grooves 7 need not necessarily be arranged at equal intervals in the tire circumferential direction. In the illustrated example, the shallow grooves 7 extend linearly in a planar view, but may also extend in a zigzag manner. In this example, both ends of the shallow grooves 7 open to the circumferential main grooves 2, but either one or both ends may terminate within the block 5.

In the present embodiment, the inclination angle $\theta 2$ of the shallow grooves 7 relative to the tire circumferential direction is more than 0° and less than 90°. If the inclination angle $\theta 2$ is 0°, the edge component in the tire width direction (edge component relative to the tire circumferential direction) by the shallow grooves 7 becomes small. Further, if the inclination angle $\theta 2$ is 90°, the edge component in the tire circumferential direction (edge component relative to the tire width direction) by the shallow grooves 7 becomes small.

In the present embodiment, the groove depth (maximum depth) of the shallow grooves 7 is smaller than the depth (maximum depth) of the sipes 6. The groove depth (maximum depth) of the shallow grooves 7 is not particularly limited, but may be, for example, 0.1 to 0.3 mm. Such shallow grooves 7 may be removed early by break-in driving, for example.

Further, in the present embodiment, the magnitude of the difference between the inclination angle $\theta 1$ and the inclination angle $\theta 2$ is 30° or less (the absolute value of $\theta 1 - \theta 2$ is 30° or less). In this way, since the sipes 6 and the shallow grooves 7 are provided so as to extend in mutually opposite directions in the tire width direction relative to one direction along the tire circumferential direction, and the magnitude of the difference between the inclination angle $\theta 1$ and the inclination angle $\theta 2$ is 30° or less (including the case where it is 0), water flows uniformly through the sipes 6 and the shallow grooves 7, making it difficult for water to overflow, resulting in enhanced drainage function and effective improvement of on-ice gripping performance and wet gripping performance.

The inclination angle $\theta 1$ is preferably 45° or more, more preferably 60° or more, and still more preferably 75° or more. In this case, the edge component in the tire width direction (edge component relative to the tire circumferential direction) by the sipes 6 is increased, and by improving the function of wiping water in the tire circumferential direction, on-ice gripping performance and wet gripping performance can be further improved.

In this example, the sipes 6 have the same inclination angle relative to the tire circumferential direction as the width direction grooves 4, but they may be different.

The inclination angle $\theta 2$ is preferably 45° or more, more preferably 60° or more, and still more preferably 75° or more. In this case, the edge component in the tire width direction (edge component relative to the tire circumferential direction) by the shallow grooves 7 is increased, and by improving the function of wiping water in the tire circumferential direction, on-ice gripping performance and wet gripping performance can be further improved.

Further, the magnitude of the difference between the inclination angle $\theta 1$ and the inclination angle $\theta 2$ is preferably 15° or less, more preferably 10° or less, still more preferably 5° or less, and particularly preferably 0°. In this case, water flows uniformly through the sipes 6 and the shallow grooves 7, and on-ice gripping performance and wet gripping performance can be further improved.

However, even in the case where the magnitude of the difference between the inclination angle $\theta 1$ and the inclination angle $\theta 2$ is more than 15° and 30° or less, it may be preferable from the viewpoint of ensuring the rigidity of the land portion and improving the grounding property by preventing the block pieces defined by the sipes 6 and the shallow grooves 7 from having portions with too small an acute angle.

Further, the groove width (opening width) of the shallow grooves 7 is preferably 0.75 to 1.0 times the sipe width (opening width) of the sipes 6. In this way, when the widths of the sipes 6 and the shallow grooves 7 are close to each other within the above range, and the magnitude of the difference between the inclination angle θ1 and the inclination angle θ2 is within the above ranges, water flows more uniformly, and on-ice gripping performance and wet gripping performance can be further improved. The groove width (opening width) of the shallow grooves 7 is not particularly limited, but may be, for example, 0.3 to 0.4 mm.

EXAMPLES

Hereinafter, the present disclosure will be described in more detail with reference to examples, but these examples are intended to illustrate the present disclosure and are not intended to limit the present disclosure in any way.
In accordance with the formulation shown in Table 1, a rubber composition was prepared by kneading in a conventional manner. Next, the rubber composition was vulcanized at 145°C for 33 minutes to obtain a vulcanized rubber in which a plurality of voids derived from the foaming agent were formed.

(On-Ice Gripping Performance and Wet Gripping Performance)

For the obtained vulcanized rubber, the loss tangent (tanδ) at -20°C and 0°C was measured using a spectrometer manufactured by Ueshima Seisakusho Co., Ltd. under the conditions of initial strain 2%, initial input 150 μm, and frequency 52 Hz. The results are presented in Table 1. The larger the value, the better the on-ice gripping performance and wet gripping performance.

[Table 1]

Table 1

| | | | | Comparative Example 1 | Example 1 | Example 2 | Example 3 | Example 4 |
|---|---|---|---|---|---|---|---|---|
| Formulation | Rubber component | Natural rubber *1 | Parts by mass | 35 | 65 | 65 | 55 | 60 |
| | | Butadiene rubber *2 | | 65 | 35 | 35 | 45 | 40 |
| | Filler | Carbon black 1 *3 | | 65 | 65 | 70 | 65 | 0 |
| | | Carbon black 2 *4 | | 0 | 0 | 0 | 0 | 60 |
| | | Silica *5 | | 0 | 15 | 15 | 15 | 0 |
| | Softener *6 | | | 15 | 12 | 12 | 12 | 12 |
| | C5 resin *7 | | | 0 | 15 | 15 | 15 | 20 |
| | Foaming agent *8 | | | 9 | 9.7 | 9.7 | 8.7 | 7 |
| | Sulfur | | | 1.2 | 1.4 | 1.1 | 1.2 | 1.6 |
| | Vulcanization accelerator *9 | | | 0.7 | 0.8 | 0.6 | 0.8 | 1 |
| Proportion of carbon black in filler | | Mass% | | 100 | 81 | 82 | 81 | 100 |
| Proportion of silica in filler | | Mass% | | 0 | 19 | 18 | 19 | 0 |
| On-ice gripping performance | tand@-20°C | | - | 0.277 | 0.517 | 0.505 | 0.497 | 0.565 |

(continued)

| | | | Comparative Example 1 | Example 1 | Example 2 | Example 3 | Example 4 |
|---|---|---|---|---|---|---|---|
| Wet gripping performance | tand@0°C | - | 0.220 | 0.318 | 0.331 | 0.313 | 0.237 |

*1 Natural rubber: TSR20
*2 Butadiene rubber: "UBEPOL BR150L" manufactured by Ube Elastomer Co., Ltd.
*3 Carbon black 1: HS-HAF grade
*4 Carbon black 2: ISAF-HS grade
*5 Silica: "Nipil AQ" manufactured by Tosoh Silica Corporation
*6 Softener: Oil, "Super Oil Y22" manufactured by ENEOS Corporation
*7 $C_5$ resin: Hydrogenated $C_5$ resin, "Impera® (Impera is a registered trademark in Japan, other countries, or both) E1780" manufactured by Synthomer Adhesive Technologies LLC
*8 Foaming agent: Azodicarbonamide (ADCA)
*9 Vulcanization accelerator: "Sanceler CM-G" manufactured by Sanshin Chemical Industry Co., Ltd., "PILCURE MBTS" manufactured by NOCIL LIMITED

From Table 1, it can be seen that the vulcanized rubbers of the examples exhibit both higher wet gripping performance and on-ice gripping performance compared to the vulcanized rubber of the comparative example.

INDUSTRIAL APPLICABILITY

According to the present disclosure, it is possible to provide vulcanized rubber for a tire that can achieve excellent wet gripping performance in addition to on-ice gripping performance of a tire.
Further, according to the present disclosure, it is possible to provide a pneumatic tire that is excellent in on-ice gripping performance and also excellent in wet gripping performance.

REFERENCE SIGNS LIST

1: Tread surface
2: Circumferential main groove
3: Land portion
4: Width direction groove
5: Block
6: Sipe
7: Shallow groove
CL: Tire equator
TE: Tread edge

Claims

1. Vulcanized rubber for a tire comprising a rubber component, a filler, and a $C_5$ resin, wherein

   a proportion of natural rubber is 35 mass% or more and a proportion of butadiene rubber is 65 mass% or less in 100 mass% of the rubber component,
   content of the filler is 55 parts by mass or more per 100 parts by mass of the rubber component,
   a proportion of carbon black is 70 mass% or more and a proportion of silica is not less than 0 mass% and not more than 20 mass% in 100 mass% of the filler, and
   a plurality of voids are present.

2. The vulcanized rubber for a tire according to claim 1, wherein the proportion of natural rubber is 60 mass% or more in 100 mass% of the rubber component.

3. The vulcanized rubber for a tire according to claim 1 or 2, wherein the content of the filler is 80 parts by mass or more per 100 parts by mass of the rubber component.

4.  The vulcanized rubber for a tire according to claim 1 or 2, wherein the proportion of carbon black is 80 mass% or more in 100 mass% of the filler.

5.  The vulcanized rubber for a tire according to claim 1 or 2, wherein content of the $C_5$ resin is not less than 5 parts by mass and not more than 18 parts by mass per 100 parts by mass of the rubber component.

6.  The vulcanized rubber for a tire according to claim 1 or 2, wherein the $C_5$ resin is a hydrogenated $C_5$ resin.

7.  The vulcanized rubber for a tire according to claim 1 or 2, further comprising a softener, wherein content of the softener is not less than 5 parts by mass and not more than 16 parts by mass per 100 parts by mass of the rubber component.

8.  A pneumatic tire using the vulcanized rubber for a tire according to claim 1 or 2 in a tread portion, wherein

    a plurality of blocks are defined on a tread surface of the tread portion by a plurality of circumferential main grooves extending in a tire circumferential direction and a plurality of width direction grooves extending in a tire width direction,
    a plurality of sipes and a plurality of shallow grooves that extend in mutually opposite directions in the tire width direction, relative to one direction along the tire circumferential direction, are provided at a surface of the blocks,
    a depth of the shallow grooves is smaller than a depth of the sipes,
    an inclination angle $\theta 1$ of the sipes relative to the tire circumferential direction is more than 0° and less than 90°,
    an inclination angle $\theta 2$ of the shallow grooves relative to the tire circumferential direction is more than 0° and less than 90°, and
    a magnitude of a difference between the inclination angle $\theta 1$ and the inclination angle $\theta 2$ is 30° or less.

FIG. 1

## INTERNATIONAL SEARCH REPORT

| | International application No. |
| --- | --- |
| | **PCT/JP2024/028754** |

### A. CLASSIFICATION OF SUBJECT MATTER

***C08J 9/06***(2006.01)i; ***B60C 1/00***(2006.01)i; ***B60C 11/03***(2006.01)i; ***C08L 7/00***(2006.01)i
FI: C08J9/06 CEQ; B60C11/03 300A; C08L7/00; B60C1/00 A

According to International Patent Classification (IPC) or to both national classification and IPC

### B. FIELDS SEARCHED

Minimum documentation searched (classification system followed by classification symbols)

C08J9/06; B60C1/00; B60C11/03; C08L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/116701 A1 (BRIDGESTONE CORPORATION) 20 June 2019 (2019-06-20) claims, paragraphs [0092]-[0103], [0111], examples | 1-5 |
| Y | | 6-8 |
| Y | JP 2010-254852 A (BRIDGESTONE CORPORATION) 11 November 2010 (2010-11-11) claims, paragraphs [0049]-[0055], [0070]-[0074], examples | 1-8 |
| Y | JP 2023-73704 A (BRIDGESTONE CORPORATION) 26 May 2023 (2023-05-26) claims, paragraphs [0029]-[0036], examples | 1-8 |
| Y | JP 2022-46330 A (THE YOKOHAMA RUBBER CO., LTD.) 23 March 2022 (2022-03-23) claims, examples, figures | 8 |
| A | JP 2015-528844 A (COMPAGNIE GENERALE DES ETABLISSEMENTS MICHELIN) 01 October 2015 (2015-10-01) entire text | 1-8 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/028754** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2021-109935 A (SUMITOMO RUBBER INDUSTRIES, LTD.) 02 August 2021 (2021-08-02) <br> entire text | 1-8 |
| A | WO 2018/043058 A1 (THE YOKOHAMA RUBBER CO., LTD.) 08 March 2018 (2018-03-08) <br> entire text | 1-8 |

Form PCT/ISA/210 (second sheet) (July 2022)

## INTERNATIONAL SEARCH REPORT
### Information on patent family members

| International application No. |
| --- |
| **PCT/JP2024/028754** |

| Patent document cited in search report | | | Publication date (day/month/year) | Patent family member(s) | Publication date (day/month/year) |
| --- | --- | --- | --- | --- | --- |
| WO | 2019/116701 | A1 | 20 June 2019 | US 2019/0185642 A1 claims, paragraphs [0137]-[0158], [0175], [0176], examples | |
| JP | 2010-254852 | A | 11 November 2010 | (Family: none) | |
| JP | 2023-73704 | A | 26 May 2023 | (Family: none) | |
| JP | 2022-46330 | A | 23 March 2022 | US 2023/0311576 A1 claims, examples, figures | |
| JP | 2015-528844 | A | 01 October 2015 | US 2015/0259516 A1 entire text | |
| JP | 2021-109935 | A | 02 August 2021 | (Family: none) | |
| WO | 2018/043058 | A1 | 08 March 2018 | US 2021/0291594 A1 entire text | |

Form PCT/ISA/210 (patent family annex) (July 2022)

# REFERENCES CITED IN THE DESCRIPTION

## Patent documents cited in the description

- WO 2019116701 A1
- JP 2015520259 A
- EP 3427975 A
- JP 6856781 B
- EP 3173251 A

## Non-patent literature cited in the description

- *Rubber Chemistry and Technology*, 2012, vol. 85 (3), 408-449
- Comparison of surface morphology and chemistry of pyrolytic carbon black and commercial carbon black. *Powder Technology*, 2005, vol. 160, 190-193